# EUROPÄISCHE PATENTSCHRIFT

(11) **EP 0 844 015 B1**
(45) Veröffentlichungstag und Bekanntmachung des Hinweises auf die Patenterteilung: **15.10.2003**
(21) Anmeldenummer: 97119797.5
(22) Anmeldetag: 12.11.1997
(51) Int. Cl.: B01D 63/02, B01D 63/06, A61M 1/18

(54) **Hohlfasermembrantrennvorrichtung**
Hollow fiber membrane separation device
Dispositif de séparation ayant une membrane de fibre creuse

(30) Priorität: 21.11.1996 DE 19648275; 21.11.1996 DE 19648276; 26.06.1997 DE 19727250; 07.10.1997 DE 19744336
(43) Veröffentlichungstag der Anmeldung: 27.05.1998
(60) Teilanmeldung: 03008579.9
(73) Patentinhaber: Fresenius Medical Care Deutschland GmbH, 61352 Bad Homburg v.d.H. (DE)
(72) Erfinder: Hahmann, Uwe, 75233 Tiefenbronn (DE); Heilmann, Klaus, 66606 St. Wendel (DE); Schönhofen, Michael, Dr., 66606 St. Wendel (DE); Wiesen, Gerhard, 61348 Bad Homburg (DE)
(74) Vertreter: Laufhütte, Dieter, Dr.-Ing.

(56) Entgegenhaltungen:
- EP-A- 0 305 687
- DE-A- 4 036 978
- US-A- 4 640 773
- US-A- 5 472 601

## Beschreibung

Die Erfindung betrifft eine Filtervorrichtung mit zwei Strömungsräumen, von denen ein erster Raum, vorzugsweise ein Permeatraum, durch die Röhren- oder Kapillarröhren-Durchgänge eines an seinen Enden in eine Vergußmasse eingegossenen Hohlfaserbündels und ein zweiter Raum, vorzugsweise ein Filtratraum, durch ein das Hohlfaserbündel einfassendes Gehäuse gebildet ist, der durch die Vergußmasse gegenüber den Ein- und Ausgängen der Röhren des Hohlfaserbündels abgedichtet ist, und mit mindestens zwei Anschlußstutzen zum Zu- und Abführen von Flüssigkeiten in bzw. aus jedem der beiden Räume, von denen der mindestens eine Anschlußstutzen des zweiten Raums in einem zwischen dem Gehäuse und dem Bereich eines Endes des Hohlfaserbündels gebildeten Ringraum mündet, mit aus elastischem und/oder plastischen Material bestehenden Rändern des Gehäuses, die von der Vergußmasse eingefaßt sind, wobei den Ringraum mit dem zweiten Raum verbindende Durchlässe unmittelbar an die Vergußmassen anschließen bzw. sich in axialer Richtung in deren Bereich erstrecken.

Aus der DE-OS 26 46 358 ist eine Filtervorrichtung bekannt, bei der das Hohlfaserbündel ringartig ein zentrales Rohr einfaßt und die Enden des ringförmigen Hohlfaserbündels durch eine Vergußmasse sowohl gegenüber dem zentralen Rohr als auch gegenüber dem dieses konzentrisch einfassenden Gehäusemantel abgedichtet sind.

Eine andere bekannte Filtervorrichtung besteht ebenfalls aus einem rohrförmigen Gehäuse, das das Hohlfaserbündels einfaßt, wobei die Enden des Hohlfaserbündels durch eine Vergußmasse mit den Enden des rohrförmigen Gehäuses verbunden sind. Bei dieser Filtervorrichtung ist das Gehäuse jeweils angrenzend an die Vergußmassen mit radialen Anschlußstutzen versehen, die die Ein- und Ausgänge zu dem zweiten Strömungsraum bilden. Zur Öffnung der von den Vergußmassen eingefaßten Kapillarröhren des Hohlfaserbündels werden diese an ihren Stirnseiten angeschnitten. Auf die Enden des rohrförmigen Mantels werden sodann dichtend Kappen aufgesetzt, die mit Stutzen versehen sind, die die Ein- und Ausgänge des ersten Strömungsraums bilden.

Diese bekannten Filtervorrichtungen werden beispielsweise als Kapillardialysatoren eingesetzt, wobei die durch die Kapillarröhren-Durchgänge gebildeten Strömungsräume den Blutraum und das die Hohlfaserbündel einfassende Gehäuse den Dialysatraum bilden, in dem die Hohlfasern von dem Dialysat umspült werden.

Bei den bekannten Filtervorrichtungen besteht das Problem, daß die üblicherweise aus PU bestehende Vergußmasse, die scheibenförmig aushärtet und eine Abdichtung zwischen den beiden Strömungsräumen bildet, bei ihrer Aushärtung schrumpft, so daß sich in den durch die Vergußmassen gebildeten scheibenförmigen Abdichtungen Spannungen ausbilden, die zu Rissen und auch zu Ablösungen der Vergußmassen von dem diese einfassenden Gehäusemantel führen können. Die Folge ist, daß die beiden Strömungsräume nicht mehr vollständig gegeneinander abgedichtet sind und daß die die Dichtung bewirkende Adhäsion der Dichtungsmassen zu dem das Faserbündel einfassenden Gehäuse nicht mehr mit Sicherheit gewährleistet ist.

Bei einer aus EP 0 305 687 B1 bekannten Filtervorrichtung der eingangs angegebenen Art sind die scheibenförmigen Vergußmassen von zwischengeschalteten Ringen eingefaßt, an denen die Vergußmassen nicht haften, so daß diese spannungsfrei schrumpfen können. Durch dieses spannungsfreie Schrumpfen werden Risse in den scheibenförmigen Vergußmassen verhindert und auf eine unmittelbare Abdichtung zwischen dem Umfangsrand der Vergußmassen und dem diese einfassenden Gehäuse wird verzichtet. Um dennoch eine Abdichtung zwischen den beiden Strömungsräumen zu erhalten, ist der erste Raum durch auf die Vergußmasse aufgesetzte Kappen durch über den Randbereich der Vergußmasse verlaufenden Dichtungen, gegen die die Kappen angedrückt sind, abgedichtet.

Bei dieser bekannten Filtervorrichtung besteht nun das Problem, daß sie aufgrund der zwischengeschalteten Ringe verhältnismäßig aufwendig ist.

Außerdem kommt es zu schlecht durchspülten Toträumen oberhalb bzw. unterhalb der Anschlußstutzen, an denen sich Gasblasen sammeln können. Dies kann sich nachteilig bei der Desinfektion oder Sterilisation sowie allgemein bei der Handhabung auswirken.

Aufgabe der Erfindung ist es daher, eine Filtervorrichtung der eingangs angegebenen Art zu schaffen, die einfacher und billiger herstellbar ist.

Erfindungsgemäß wird diese Aufgabe bei einer Filtervorrichtung der eingangs angegebenen Art durch die kennzeichnenden Merkmale des Patentanspruchs 1 gelöst.

Vorteilhafte Ausgestaltungsformen sind in den Ansprüchen 2-4 beschrieben.

Bei der erfindungsgemäßen Filtervorrichtung werden die Vergußmassen in diese stirnseitig und an ihren Seiten einfassenden Formen ausgehärtet, so daß die Vergußmassen spannungsfrei schrumpfen können.

Dabei ist vorgesehen, daß das rohrabschnittförmige Gehäuse, in das das Hohlfaserbündel eingezogen ist, an den Enden seines Mantels mit durch frei auslaufende, axiale Kerben oder Einschnitte gebildeten zahn- oder zinnenartigen Vorsprüngen versehen ist, deren äußeren Bereiche in die Vergußmassen eingebunden sind, so daß die freien inneren Bereiche der Kerben oder Einschnitte Durchflußöffnungen für die Flüssigkeit bilden. Da das rohrabschnittförmige oder vorzugsweise mit einem kreisrunden Querschnitt versehene Gehäuse aus einem Material mit elastischen Eigenschaften besteht, sind durch die Kerben oder Einschnitte aus federnden Zungen bestehende kranzförmige Ränder gebildet, die von der Vergußmasse zumindest teilweise eingefaßt sind. Härtet sodann die Vergußmasse zu den Scheiben aus, können diese im wesentlichen spannungsfrei schrumpfen, weil die federnden Zungen diesem Schrumpfen keinen nennenswerten Widerstand entgegensetzen. Nach dieser Ausgestaltung sind die durch die Vergußmassen gebildeten Scheiben fest mit den Enden des rohrförmigen Gehäuses verbunden, so daß sich sodann durch übergreifende Kappen mit den entsprechenden Dichtungsmitteln die beiden Strömungsräume sicher voneinander trennen lassen.

Die erfindungsgemäße Vorrichtung weist den Vorteil auf, daß ihr Gehäuse aus einem Material, beispielsweise Propylen, bestehen kann, das keine dichte Haftverbindung mit der Vergußmasse eingeht. Die erfindungsgemäße Filtervorrichtung kann daher aus billigeren Kunststoffmaterialien hergestellt werden, was deren Wirtschaftlichkeit erhöht.

Bei einer Ausgestaltung der Erfindung ist die Querschnittsfläche der von den Vergußmassen freien Bereiche der Kerben oder Einschnitte so bemessen, daß sie ausgehend von einem radialen Stutzen in ihrem Querschnitt zunehmen, so daß durch die Querschnitte im wesentlichen gleiche Teilmengen der Flüssigkeit ein- und austreten können. Diese Ausgestaltung trägt dem Umstand Rechnung, daß sich in dem das Faserbündel umgebenden Ringraum, in den die Flüssigkeit durch einen radialen Stutzen eingeleitet wird, ausgehend von der Mündung des Stutzens ein Druckgefälle in Umfangsrichtung einstellt. Durch die Anpassung der Querschnitte der Eintrittsöffnungen an diesen Druckabfall ist gewährleistet, daß in die über den Umfang verteilten Öffnungen im wesentlichen gleiche Flüssigkeitsmengen eintreten.

Um bei einseitiger Einleitung der Flüssigkeit in den Ringraum einen im wesentlichen gleichmäßigen Flüssigkeitsdruck aufrecht zu erhalten, können die Durchbrüche mit gleichen Durchtrittsquerschnitten mit entsprechend unterschiedlichen Abständen über den Umfang der Innenwandung des Ringraums verteilt werden.

Bei der bekannten Filtervorrichtung weisen die durch die Ringnuten gebildeten Ringräume einen axialen Abstand zu den durch die Vergußmassen gebildeten Abschlußscheiben auf. Dadurch können sich beispielsweise bei vertikal stehender Filtervorrichtung an der oberen durch die Vergußmasse gebildeten Scheibe Luftblasen sammeln. Weiterhin können sich auch in der unteren Ringnut zwischen der Mündung des radialen Stutzens und dem Nutgrund Luftblasen sammeln. Diese unerwünschte Ansammlung von Luft bzw. Luftblasen führt beispielsweise bei einer Sterilisation oder Desinfektion des Filters dazu, daß die luftgefüllten Bereiche nicht oder nur unzureichend mit dem Sterilisations- bzw. Desinfektionsmittel in Kontakt kommen.

Um sicherzustellen, daß in dem Ringraum, in den der mindestens eine Anschlußstutzen des zweiten Raums mündet, kein Totraum vorhanden ist, in dem sich Luftblasen sammeln können, ist bei einer Ausgestaltung vorgesehen, daß sich in der Gebrauchslage der mindestens eine Ringraum oben befindet und daß sich der Ringraum bis zu der Zu- bzw. Abführungsleitung erstreckt. Durch den oberen Ringraum kann vorzugsweise Dialysat zu- bzw. abgeführt werden.

Zweckmäßigerweise sind beide Seiten des Filters identisch ausgestaltet, so daß in jeder Stellung des Filters die nach der Erfindung vorgesehenen Wirkungen erreichbar sind.

Die erfindungsgemäße Ausgestaltung des Filters wirkt sich auch auf der Abflußseite des zweiten Raums günstig aus, da die Flüssigkeit aus dem zweiten Raum im wesentlichen gleichmäßig verteilt über den Ringraum abgezogen wird.

Ein Ausführungsbeispiel der Erfindung wird nachstehend anhand der Zeichnung näher erläutert. In dieser zeigt
- Fig. 1: einen Längsschnitt durch eine Seite der erfindungsgemäßen Filtervorrichtung,
- Fig. 2 bis 4: radiale Querschnitte einer durch die Vergußmasse gebildeten Scheibe,
- Fig. 5: einen Längsschnitt durch das Gehäuse einer bekannten Filtervorrichtung,
- Fig. 6: eine Seitenansicht einer Filtervorrichtung und
- Fig. 7: einen Schnitt durch die Filtervorrichtung nach Fig. 6.

Die Filtervorrichtung 1 besteht aus einem rohrabschnittförmigen Gehäuse 2 aus Kunststoff, dessen Ränder zu einem radialen ringförmigen Flansch 3 auslaufen. Mit dem inneren Randbereich dieses Flansches 3 oder dem Übergangsbereich zwischen dem zylindrischen Rohrteil und dem Flansch ist mit dem Gehäuse ein zylindrischer Ring verbunden, der mit Einschnitten 5 versehen ist, die rechteckige, frei auslaufende Kerben bilden. Zwischen diesen Kerben 5 sind zinnen- oder zungenartige, ebenfalls im wesentlichen rechteckige und sich in axialer Richtung erstreckende Vorsprünge 4 gebildet. Diese Vorsprünge 4 weisen an ihren oberen äußeren Endbereichen radial nach außen weisende Vorsprünge 6 auf.

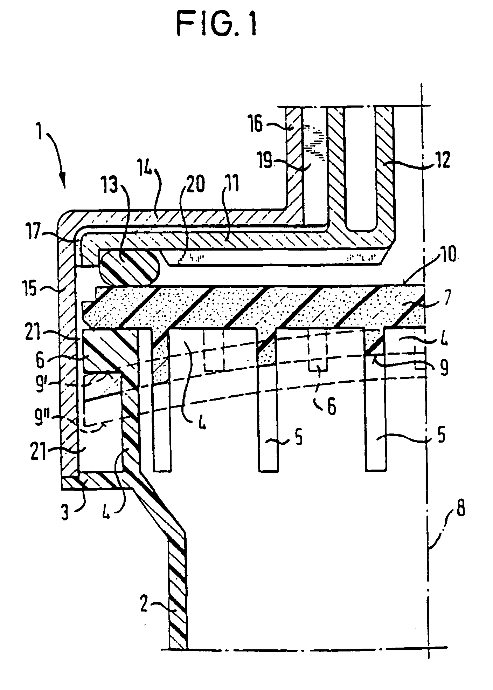

In Fig. 1 sind dabei die in die Vergußmasse 7 eintauchenden Enden der Vorsprünge 4, die sich in der hinteren Gehäusehälfte befinden, zur besseren Verdeutlichung ausgezeichnet.

In das rohrförmige Gehäuse 2 ist ein in Fig. 1 nicht dargestelltes Hohlfaserbündel eingebracht. Die Enden dieses Hohlfaserbündels sind in einer beispielsweise aus PU bestehenden Vergußmasse 7 eingebettet, die nach ihrer Aushärtung scheibenförmig ist. Da die Vergußmasse während ihrer Aushärtung mit um eine rechtwinkelig auf der Gehäuseachse 8 stehenden Rotationsachse zentrifugiert wird, besitzt die Scheibe 7 in der aus Fig. 1 ersichtlichen Draufsicht eine zylinderschalenförmige Innenseite 9. Die Aushärtung erfolgt in einer mitrotierenden Kappe, die die Stirnseite und die Umfangsseite begrenzt. Der Toleranzbereich, in dem sich die zylinderschalenförmige Innenseite 9 bewegen kann, ist durch die gestrichelten Linien 9' und 9" angedeutet.

Nach dem Aushärten der Vergußmasse wird die Scheibe 7 an ihrer Stirnseite 10 angeschnitten, so daß die Kapillarröhrchen des in die Vergußmasse eingebetteten Hohlfaserbündels geöffnet werden.

Auf die Stirnseite 10 der Scheibe 7 wird dann eine erste Kappe 11 mit zentralem Anschlußstutzen 12 aufgelegt, die an ihrem Randbereich durch einen O-Ring 13 gegenüber dem von Hohlfasern freien Randbereich der Scheibe 7 abgedichtet ist.

Die erste Kappe 11 ist von einer zweiten Kappe 14 mit zylindrischer Wandung 15 eingefaßt, deren Randbereich mit dem äußeren Rand des Ringflansches 3 flüssigkeitsdicht verbunden ist. Die zweite Kappe 14 besitzt einen zentralen zylindrischen, einen Anschlußstutzen bildenden Fortsatz 16, der den doppelwandig ausgebildeten Anschlußstutzen 12 der ersten Kappe 11 konzentrisch einfaßt. Die zweite Kappe 14 ist auf ihrer Innenseite strahlenförmig mit Stegen 17 versehen, die den erforderlichen Abstand zu der ersten Kappe 11 gewährleisten und damit Strömungskanäle begrenzen. Auch der zylindrische Fortsatz 16 ist auf seiner Innenseite mit radialen Stegen 19 versehen, die sich auf den äußeren Mantel des Stutzens 12 abstützen und Durchflußkanäle begrenzen.

Die erste Kappe 11 ist auf ihrer Unterseite sternförmig mit radialen Stegen 20 versehen, die der Aussteifung dienen.

Die zweite Kappe 14 faßt mit ihrem zylindrischen Rand 15 die Scheibe 7 und die zinnen- oder zahnförmigen Fortsätze 4 mit radialem Abstand ein, so daß ein Ringraum 21 gebildet ist, durch den die durch den Stutzen 16 eingeleitete Flüssigkeit durch die inneren Bereiche der Schlitze 5 in den das Hohlfaserbündel einfassenden Strömungsraum eintreten kann.

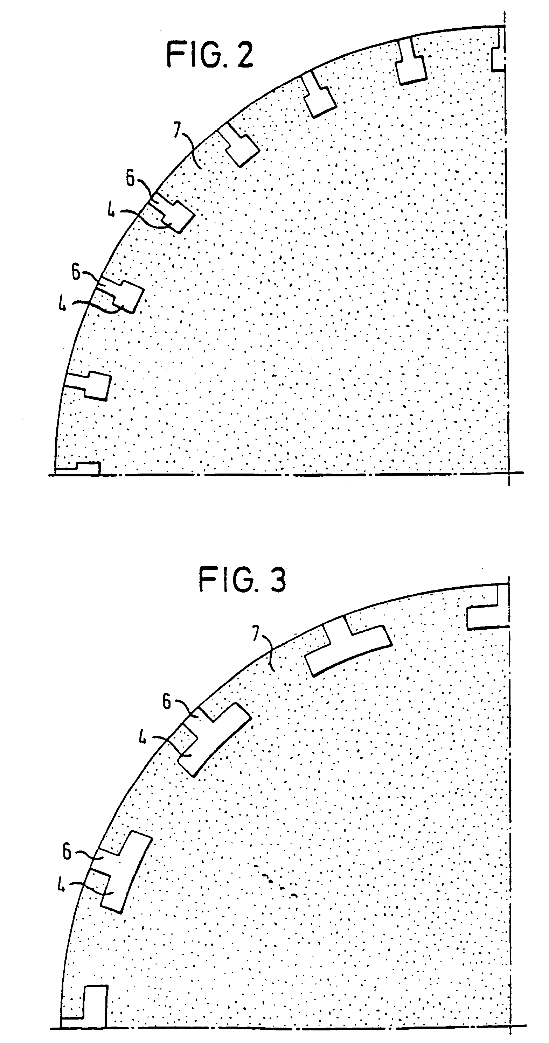

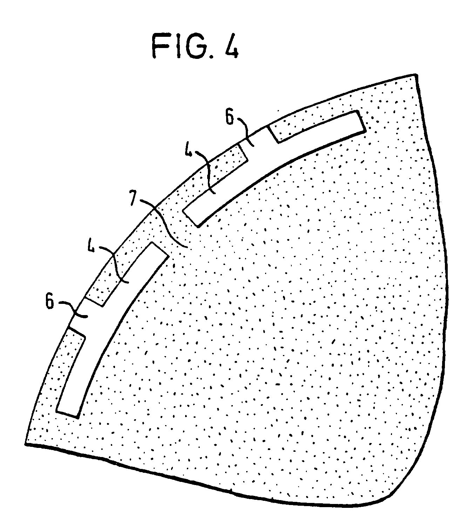

Wie aus den Fig. 2 bis 4 ersichtlich ist, können die zahn- oder zinnenartigen Vorsprünge 4 und die zwischen diesen gebildeten Spalte 5 unterschiedliche Längen bzw. Umfangswinkel einschließen. Auch die nasenförmigen radialen Vorsprünge 6 können unterschiedlich lang und breit ausgebildet sein.

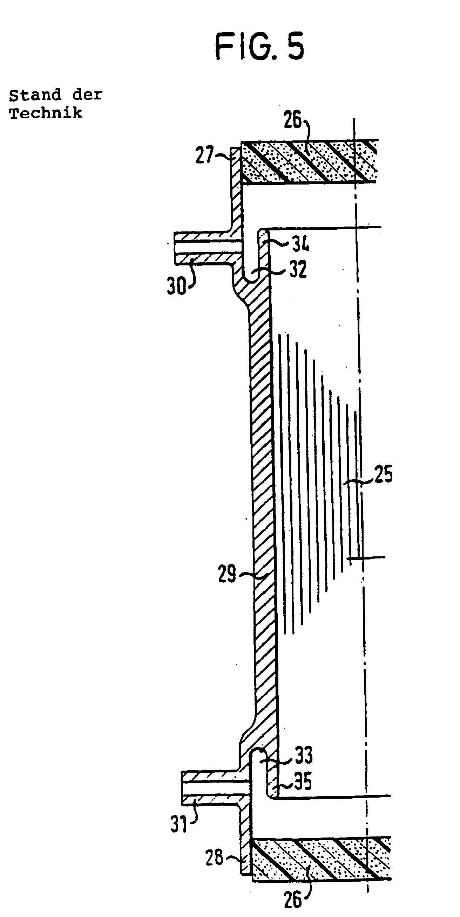

Aus Fig. 5 ist ein Längsschnitt durch das Gehäuse eines bekannten Dialysators ersichtlich. Bei diesem bekannten Dialysator sind die Enden des Hohlfaserbündels 25 von den zu Scheiben 26 ausgehärteten Vergußmassen eingefaßt, die mit den äußeren Rändern 27, 28 des Gehäuses 29 feste Verbindungen eingehen. Im Abstand von den Scheiben 26 ist das Gehäuse mit radialen Stutzen 30, 31 versehen, die in rinnenförmige Ringräume 32, 33 münden, die in der dargestellten Weise durch innere frei auslaufende ringförmige Wandungsabschnitte 34, 35 gebildet sind, deren Ränder im axialen Abstand vor den Scheiben enden. Wird bei senkrecht stehendem Gehäuse beispielsweise in den unteren radialen Stutzen 31 eine Flüssigkeit beziehungsweise Dialysat in den das Hohlfaserbündel 25 aufnehmenden Raum eingeleitet, neigt die Flüssigkeit dazu, hauptsächlich in Bereichen, die nahe an dem Stutzen 31 liegen, über den Rand der die Ringnut 33 begrenzenden Wandung 35 zu treten, so daß sich in dem Gehäuse 29 eine unsymmetrische Flüssigkeits- bzw. Dialysatströmung ausbildet.

Diese unsymmetrische Strömung wird bei der anhand der Fig. 1 bis 4 erläuterten erfindungsgemäßen Filtervorrichtung dadurch vermieden, daß die Flüssigkeit bzw. das Dialysat sich in dem Ringraum 21 verteilt und dann im wesentlichen mit gleicher Umfangsverteilung durch die inneren freien Bereiche der Eintrittsschlitze 5 in den das Hohlfaserbündel einschließenden Raum eintritt. Im dargestellten Ausführungsbeispiel wird der Ringraum 21 nach außen hin durch die zylindrische Wand 15 der Kappe 14 begrenzt, wobei die Kappe mit einem axialen konzentrisch angeordneten Einlaßstutzen versehen ist, so daß sich die Flüssigkeit mit gleichem Druck in dem Ringraum 21 verteilt. Da sich über den Umfang des Ringraums 21 ein im wesentlichen gleicher Druck der Flüssigkeit einstellt, können die durch die freien Bereiche der Eintrittsschlitze 5 gebildeten Eintrittsöffnungen auch gleiche Querschnitte aufweisen.

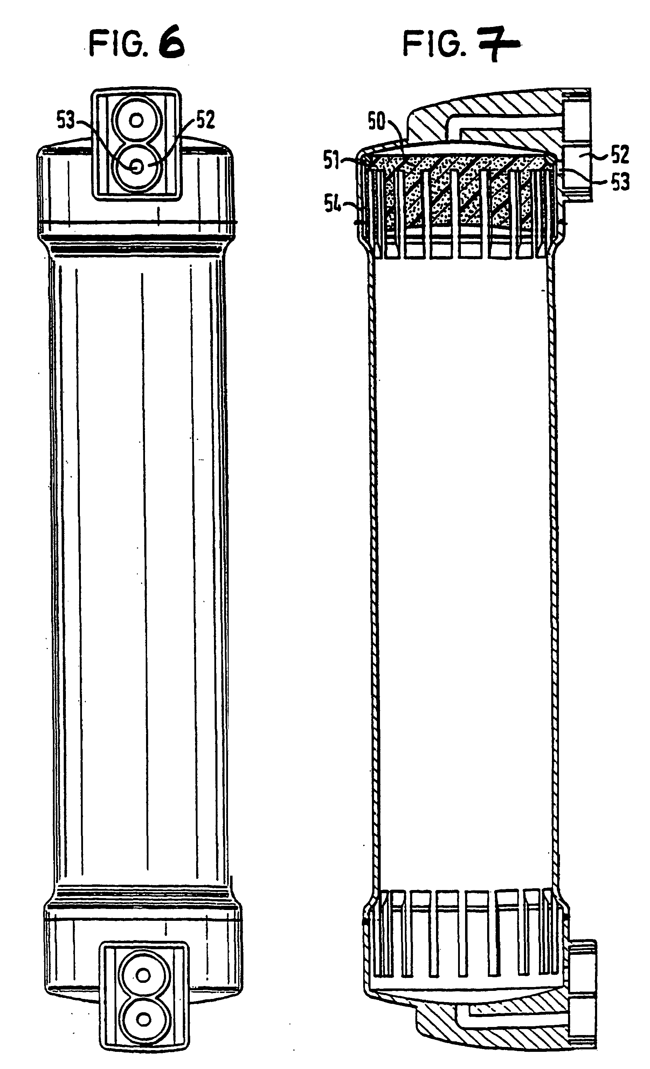

Aus Fig. 6 ist eine Seitenansicht einer Filtervorrichtung, im dargestellten Fall eines Dialysators, ersichtlich. Bei diesem Dialysator befinden sich die der Konnektierung mit den Tüllen eines Dialysegeräts dienenden Anschlüsse bzw. Anschlußstutzen auf einer Seite und weisen zueinander parallele Mittellinien auf, so daß sie unmittelbar oder durch eine geeignete Vorrichtung dichtend auf die Tüllen der Dialysevorrichtung aufgedrückt werden können.

Bei der aus den Fig. 6 und 7 ersichtlichen Filtervorrichtung bestehen die oberen und unteren mit den Anschlüssen bzw. Anschlußstutzen versehenen Kappen aus getrennt im Spritzgießverfahren hergestellten Teilen, deren Ränder durch geeignete Schweiß- oder Klebverbindungen stumpf und flüssigkeitsdicht mit den glockenförmig nach außen erweiterten Rändern des Gehäuses verbunden sind.

Wie in Fig. 1 sind in Fig. 7 die in die Vergußmasse 50 eintauchenden Enden der zinnen- oder zahnförmigen Vorsprünge, die sich in der hinteren Gehäusehälfte befinden, zur besseren Verdeutlichung ausgezeichnet.

Wie aus Fig. 7 ersichtlich ist, ist der Blutraum und der nicht dargestellten Hohlfasern umgebende Dialysatraum durch eine Vergußmasse 50 getrennt. Die Vergußmasse weist an ihrem oberen Randbereich eine umlaufende Ausnehmung aus, in die ein O-Ring 51 zur Abdichtung des Blutraums gegenüber dem Dialysatraum eingelegt ist.

Wie aus Fig. 7 ersichtlich ist, schließt der in den Stutzen 52 mündende Durchbruch 53 unmittelbar an die Unterseite des O-Rings 51 an, wobei sich der Ringraum 54, der der Zu- bzw. Abführung des Dialysats dient, bis an die O-Dichtung erstreckt, so daß kein Totraum vorhanden ist, in dem sich Luftblasen sammeln könnten.

## Patentansprüche

1. Filtervorrichtung (1) mit zwei Strömungsräumen, von denen ein erster Raum, vorzugsweise ein Permeatraum, durch die Röhren- oder Kapillarröhren-Durchgänge eines an seinen Enden in eine Vergußmasse (7, 50) eingegossenen Hohlfaserbündels und ein zweiter Raum, vorzugsweise ein Filtratraum, durch ein das Hohlfaserbündel einfassendes Gehäuse (2) gebildet ist, der durch die Vergußmasse (7, 50) gegenüber den Ein- und Ausgängen der Röhren des Hohlfaserbündels abgedichtet ist, und
mit mindestens zwei Anschlußstutzen (12, 16, 53) zum Zu- und Abführen von Flüssigkeiten in bzw. aus jedem der beiden Räume, von denen der mindestens eine Anschlußstutzen (16, 53) des zweiten Raums in einem zwischen dem Gehäuse (2, 15) und dem Bereich eines Endes des Hohlfaserbündels gebildeten Ringraum (21, 54) mündet,
mit aus elastischem und/oder plastischen Material bestehenden Rändern (4) des Gehäuses, die von der Vergußmasse eingefaßt sind,
wobei den Ringraum (21, 54) mit dem zweiten Raum verbindende Durchlässe (5) unmittelbar an die Vergußmassen (7, 50) anschließen bzw. sich in axialer Richtung in deren Bereich erstrecken,
**dadurch gekennzeichnet,**
**daß** das Gehäuse (2) aus einem Material, beispielsweise Polypropylen, besteht, das keine dichte Haftverbindung mit der Vergußmasse (7, 50) eingeht.

2. Filtervorrichtung nach Anspruch 1, **dadurch gekennzeichnet, daß** sich in der Gebrauchslage der Ringraum (21, 54) oben befindet und daß der Anschlußstutzen (16, 53) des zweiten Raums in dieser Orientierung am oberen Ende des Ringraums (21, 54) in diesen mündet, so daß kein Totraum im Ringraum (21, 54) und im zweiten Raum vorhanden ist, in dem sich Luftblasen sammeln können.

3. Filtervorrichtung nach Anspruch 1 oder 2, **dadurch gekennzeichnet**, däß sich der Ringraum (21, 54) bis zu einer Dichtung (51) erstreckt, die an der Vergußmasse den ersten Raum gegenüber dem zweiten Raum abdichtet.

4. Filtervorrichtung nach einem der vorhergehenden Ansprüche, **dadurch gekennzeichnet, daß** der Querschnitt der Durchlässe (5) so bemessen ist, daß sie ausgehend von einem radialen Stutzen (53). in ihrem Querschnitt zunehmen, so daß durch die Querschnitte im wesentlichen gleiche Teilmengen der Flüssigkeit ein- und austreten können.

## Claims

1. Filter device (1) with two flow spaces, of which a first space, preferably a permeate, is formed by the tube or capillary-tube passages of a hollow-fibered bundle cast at its ends into a sealing compound (7, 50) and a second space, preferably a filtrate space, is formed by a housing (2) which borders the hollow-fibre bundle and which is sealed off with respect to the inlets and outlets of the tubes of the hollow-fibre bundle by means of the sealing compound (7, 50), and with at least two connection pieces (12, 60, 53) for the supply and discharge of liquids into and out of each of the two spaces, of which the at least one connection piece (16, 53) of the second space issues in an annular space (21, 54) formed between the housing (2, 15) and the region of one end of the hollow-fibre bundle, and with edges (4) of the housing which consist of elastic and/or plastic material and which are bordered by the sealing compound, passageways (5) which connect the annular space (21, 54) to the second space being directly adjacent to the sealing compounds (7, 50) or extending in the axial direction in the region of the latter, **characterized in that** the housing (2) consists of a material, for example polypropylene, which does not make a leak-tight adhesive bond with the sealing compound (7, 50).

2. Filter device according to Claim 1, **characterized in that**, in the position of use, the annular space (21, 54) is located at the top, and **in that**, in this orientation, the connection piece (16, 53) of the second space issues into the annular space (21, 54) at the upper end of the latter, so that, in the annular space (21, 54) and in the second space, there is no dead space in which air bubbles can collect.

3. Filter according to Claim 1 or 2, **characterized in that** the annular space (21, 54) extends as far as a seal (51) which seals off the first space with respect to the second space at the sealing compound.

4. Filter device according to one of the preceding claims, **characterized in that** the cross section of the passageways (5) is dimensioned such that, starting from a radial connection piece (53), they increase in cross section, so that essentially identical part-quantities of the liquid can enter and emerge through the cross sections.

## Revendications

1. Dispositif de filtration (1) avec deux espaces d'écoulement, dont un premier espace, de préférence un espace de perméat, est formé par des passages tubulaires ou de tubes capillaires d'un faisceau de fibres creuses coulé à ses extrémités dans une masse de scellement (7, 50), et dont un deuxième espace, de préférence un espace de filtrat, est formé par un boîtier (2) entourant le faisceau de fibres creuses, qui est rendu étanche par la masse de scellement (7, 50) par rapport aux entrées et sorties des tubes du faisceau de fibres creuses, et
avec au moins deux raccords (12, 16, 53) pour l'amenée et l'évacuation de liquides dans respectivement de chacun des deux espaces, dont au moins un raccord (16, 53) du deuxième espace débouche dans un espace annulaire (21, 54) formé entre le boîtier (2, 15) et la zone d'une extrémité du faisceau de fibres creuses,
avec des bords (4) du boîtier réalisés en matériau élastique et/ou plastique, qui sont entourés par la masse de scellement,
où des passages traversants (5) reliant l'espace annulaire (21, 54) au deuxième espace font suite directement aux masses de scellement (7, 50) respectivement s'étendent dans la direction axiale dans leur zone,
**caractérisé**
**en ce que** le boîtier (2) est réalisé en un matériau, par exemple en polypropylène, qui n'entre pas dans une liaison d'adhésion étanche avec la masse de scellement (7, 50).

2. Dispositif de filtration selon la revendication 1, **caractérisé en ce qu'**en position d'utilisation, l'espace annulaire (21, 54) se trouve en haut, et **en ce que** le raccord (16, 53) du deuxième espace débouche dans cette orientation à l'extrémité supérieure de l'espace annulaire (21, 54) dans celui-ci de telle sorte qu'il n'y a pas d'espace mort dans l'espace annulaire (21, 54) et dans le deuxième espace, dans lequel des bulles d'air peuvent s'accumuler.

3. Dispositif de filtration selon la revendication 1 ou 2, **caractérisé en ce que** l'espace annulaire (21, 54) s'étend jusqu'à un joint d'étanchéité (51) qui rend étanche à la masse de scellement le premier espace par rapport au deuxième espace.

4. Dispositif de filtration selon l'une des revendications précédentes, **caractérisé en ce que** la section transversale des passages traversants (5) est dimensionnée de façon qu'ils augmentent, en partant d'un raccord radial (53) dans leur section transversale de sorte qu'à travers les sections transversales, sensiblement les mêmes quantités partielles de liquide peuvent entrer et sortir.
